# EUROPÄISCHE PATENTSCHRIFT

(11) **EP 2 013 512 B1**
(45) Veröffentlichungstag und Bekanntmachung des Hinweises auf die Patenterteilung: **09.01.2013**
(21) Anmeldenummer: 07712431.1
(22) Anmeldetag: 05.03.2007
(51) Int. Cl.: F16F 9/05

(54) **VERSCHLEISSBESTÄNDIGE LUFTFEDER**
WEAR AND TEAR RESISTANT PNEUMATIC SPRING
AMORTISSEUR PNEUMATIQUE RÉSISTANT À L'USURE

(30) Priorität: 25.04.2006 DE 102006019011
(43) Veröffentlichungstag der Anmeldung: 14.01.2009
(73) Patentinhaber: ContiTech Luftfedersysteme GmbH, 30165 Hannover (DE)
(72) Erfinder: RECK, Siegfried, 31582 Nienburg (DE); MAHNKEN, Claus-Lüder, 27367 Ahausen (DE); BANK, Christoph, 31275 Lehrte-aligse (DE)
(74) Vertreter: Finger, Karsten
(86) Internationale Anmeldenummer: PCT/EP2007/052039
(87) Internationale Veröffentlichungsnummer: WO 2007/122034

(56) Entgegenhaltungen:
- EP-A1- 0 199 952
- EP-A2- 0 262 080
- DE-A1- 10 055 111
- DE-A1- 10 323 332
- DE-A1-102004 007 332
- GB-A- 2 143 301
- JP-A- 2005 199 761

## Beschreibung

Die Erfindung betrifft eine Luftfeder mit einem Luftfederkolben, einem Luftfederdeckel und einem Luftfederbalg aus elastomerem Material mit in das elastomere Material eingebetteten Festigkeitsträgern, wobei der Luftfederbalg auf seiner inneren oder seiner äußeren Mantelfläche oder auf seiner inneren und äußeren Mantelfläche eine Struktur aus einer Matrix aus elastomerem Material mit eingebetteten, die Gleitfähigkeit verbessernden Stoffen aufweist.

Derartige Luftfedern sind häufig beispielsweise in Schienen- oder Straßenfahrzeugen, insbesondere in Lastkraftwagen im Einsatz. Der prinzipielle Aufbau und die Funktionsweise sind dem Fachmann daher bekannt.

Besonders aufgrund der hohen Qualität der zum Einsatz kommenden Werkstoffe, insbesondere der Festigkeitsträger, wird die Lebensdauer einer Luftfeder der genannten Art häufig nicht durch den Bruch eines Festigkeitsträgers, sondern durch den Verschleiß der Balgwand bestimmt.

Es ist daher bekannt, die Balgwand mit verschiedenen Stoffen zu beschichten, die die Gleitfähigkeit der Oberfläche verbessern

Die JP 55-076237 und die JP 2005-199761 zeigen Luftfedern für Schienenfahrzeuge, die eine reibungsarme Zwischenlage aus synthetischen Fasern aufweisen. Diese Zwischenlage ist in einem Bereich angeordnet, in dem der Luftfederbalg mit einem Stützteller intermittierend in Kontakt kommt, wobei durch Verdrehung des Luftfederbalges gegen den Stützteller um die Hauptachse der Luftfeder in diesem Kontaktbereich eine hohe Reibbelastung der Balgaußenwand auftritt.

Die Zwischenlage ist ringförmig und bedeckt nur den genannten Kontaktbereich. Eine weitergehende verschleißmindernde und damit lebensdauerverlängernde Wirkung für die übrige Balgwand ist nicht gegeben.

Die JP 55-082832 und die JP 54-086073 zeigen Luftfedern mit ähnlich wirkenden Zwischenlagen, die jedoch in der Einklemmung des Luftfederbalges an dem dem Stützteller gegenüberliegenden Ende des Luftfederbalges wirksam sind. Auch diese Zwischenlagen beschränken ihre Wirkung nur auf den genannten Teilbereich der Balgwand.

In der DE 10 2004 007 332 A1 ist eine Luftfeder offenbart, bei der der Luftfederbalg mit einem Gleitmittel beschichtet ist, das die Haftfähigkeit von Schmutz auf der Balgaußenwand herabsetzen soll. Das Gleitmittel kann dabei bereits bei der Vulkanisation des Balges aufgebracht werden und ist so mit dem Material des Balges gut vernetzbar.

Von dieser Beschichtung ist jedoch eine dauerhaft verschleißmindernde Wirkung trotzdem noch nicht zu erwarten, da hier zwar die Reibung herabgesetzt wird, ein weitergehender mechanischer Schutz der Balgwand aber nicht gegeben ist. Außerdem reiben sich herkömmliche Gleitmittel in vielen Fällen noch zu schnell von der Balgwand ab.

Der Erfindung liegt die Aufgabe zugrunde, eine Luftfeder der eingangs geschilderten Art zu schaffen, bei der der Luftfederbalg eine gegenüber dem Stand der Technik verbesserte Lebensdauer aufweist.

Diese Aufgabe wird dadurch gelöst, dass die in die elastomere Matrix eingebetteten Stoffe Fasern sind, bei denen Teillängen der eingebetteten Fasern aus der Oberfläche der Struktur herausgearbeitet sind und aufgerichtet aus der Oberfläche der Struktur hervorstehen.

Die Fasern lassen sich beispielsweise mittels Bürsten aus der Oberfläche der Struktur herausarbeiten. Dadurch entsteht ein samtartiger Faserpelz, durch den die Oberfläche des Balges gut gegen Verschleiß geschützt ist. Als zusätzlicher Vorteil ergibt sich, dass die Geräuschentwicklung der Luftfeder beim Abrollvorgang überraschend stark zurückgeht, besonders im Bereich hoher Frequenzen.

Gemäß der Erfindung sind die eingebetteten, die Gleitfähigkeit verbessernden Stoffe Polyimid - Mahlfasern.

Derartige Fasern haften besonders gut in elastomerem Material, bieten einen guten Widerstand gegen Verschleiß, haben eine hohe Eigenelastizität und verbessern außerdem die Gleitfähigkeit.

Gemäß der Erfindung weisen die eingebetteten Polyimid - Mahlfasern der Struktur eine Länge von 0,2 bis 3 mm auf.

In einer weiteren Ausführungsform der Erfindung weisen die eingebetteten Polyimid - Mahlfasern der Struktur eine Länge von 0,5 bis 2,3 mm auf.

Bei diesen Faserlängen, insbesondere zwischen 0,5 und 2,3 mm ergibt sich neben einer guten Verarbeitbarkeit eine besonders gute Gleitfähigkeit der Struktur bei gleichzeitig gutem Widerstand gegen Verschleiß.

Nachstehend wird die Erfindung anhand der Zeichnung näher erläutert. Es zeigt
Fig. 1 einen Längsschnitt durch eine erfindungsgemäße Luftfeder und
Fig. 2 einen Teilschnitt der Wand des Balges der erfindungsgemäßen Luftfeder mit Struktur in vergrößerter Darstellung.

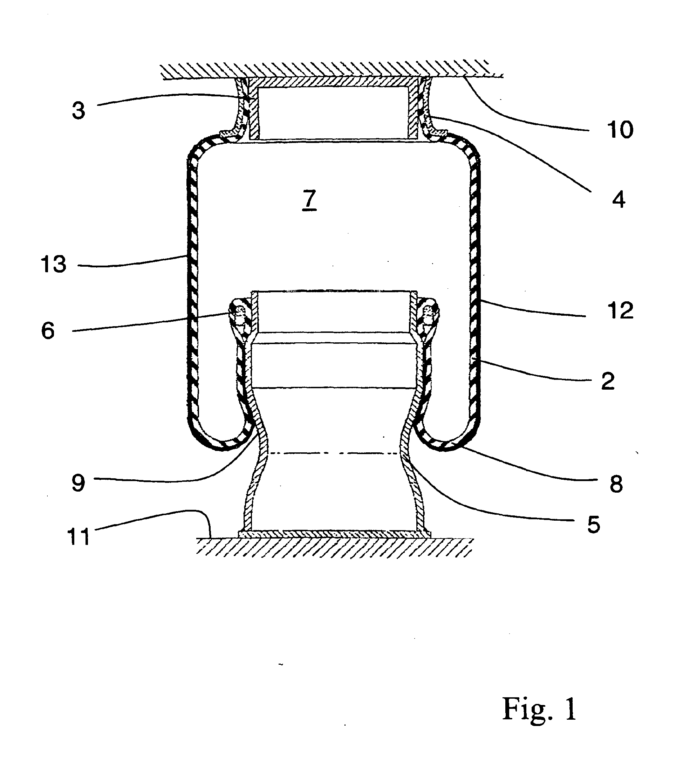

In der Fig. 1 ist eine Luftfeder 1 mit einem Rollbalg 2 dargestellt. Der Rollbalg 2 ist aus elastomerem Werkstoff gebildet und ist an seinem ersten axialen Ende an einem Luftfederdeckel 3 mittels eines Spannringes 4 gasdicht befestigt und an seinem zweiten axialen Ende an einem Luftfederkolben oder auch Abrollkolben 5 ebenfalls mit einem Spannring 6 gasdicht befestigt. Der Abrollkolben 5 ist dabei so angeordnet, dass er mit seinem dem zweiten Ende des Luftfederbalges 2 zugeordneten Ende in das Innere 7 des Luftfederbalges 2 hineinragt und der Luftfederbalg 2 in bekannter Weise eine Rollfalte 8 bildet, die sich bei Relativbewegungen zwischen Luftfederdeckel 3 und Abrollkolben 5 längs der Hauptachse der Luftfeder 1 auf der äußeren Mantelfläche 9 des Abrollkolbens 5 abrollt.

Der Luftfederdeckel 3 ist an einer nicht genauer dargestellten Karosserie 10 und der Abrollkolben 5 an einem nicht genauer dargestellten Fahrwerksteil 11 eines nicht gezeigten Fahrzeuges befestigt.

Der Luftfederbalg 2 weist auf seiner äußeren radialen Mantelfläche 12 eine Struktur 13 auf, die sich über die gesamte Mantelfläche 12 erstreckt. Die Struktur 13 ist aus einer elastomeren Matrix mit eingebetteten Polyimid - Mahlfasern aufgebaut, die durch Vulkanisation mit dem elastomeren Werkstoff des Luftfederbalges 2 fest verbunden ist. Die hohe Elastizität der Struktur 13 ermöglicht eine gute Verformung des Balges 2 auch in der Rollfalte 8.

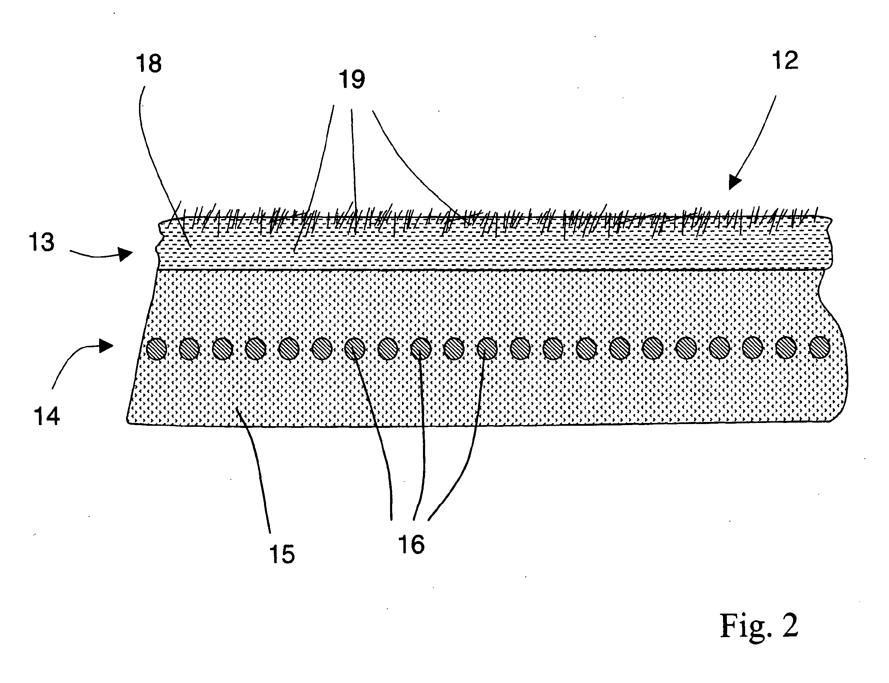

In der Fig. 2 ist ein Ausschnitt der Wand 14 des erfindungsgemäßen Luftfederbalges vergrößert dargestellt, wobei die Dickenverhältnisse der einzelnen Komponenten nicht maßstabsgerecht sind.

Die Balgwand 14 ist aus einer Elastomermatrix 15 und darin eingebetteten Festigkeitsträgern 16 aufgebaut. Auf der Außenfläche 12 der Balgwand 14 ist bereits vor der Vulkanisation des Balges die Struktur 13 aufgebracht. Die Struktur 13 besteht aus einer Matrix aus Zweikomponenten - Polyurethan 18 mit eingebetteten Fasern 19 aus Polyimid und ist durch den Vulkanisationsprozess fest mit der Balgwand 14 verbunden.

An der Oberfläche der Struktur 13 sind die Fasern 19 durch Bürsten aus der Struktur 13 teilweise herausgebürstet und stehen aufgerichtet aus der Struktur 13 hervor.

Durch die damit gebildete samtartige Oberfläche wird eine besonders gute Gleitfähigkeit der Balgwand 14 erreicht.

### Bezugszeichenliste

- 1: Luftfeder
- 2: Luftfederbalg
- 3: Luftfederdeckel
- 4: Spannring
- 5: Abrollkolben / Luftfederkolben
- 6: Spannring
- 7: Innenraum des Balges 2
- 8: Rollfalte
- 9: Mantelfläche des Kolbens 5
- 10: Karosserie
- 11: Fahrwerksteil
- 12: äußere radiale Mantelfläche des Balges 2
- 13: Struktur
- 14: Balgwand des Luftfederbalges 2
- 15: in die Balgwand 14 eingebettete Festigkeitsträger
- 18: Elastomermatrix der Struktur 13
- 19: in die Elastomermatrix 18 eingebettete Poyimid - Mahlfasern

## Patentansprüche

1. Luftfeder (1) mit einem Luftfederkolben (5), einem Luftfederdeckel (3) und einem Luftfederbalg (2) aus elastomerem Material mit in das elastomere Material (15) eingebetteten Festigkeitsträgern, wobei der Luftfederbalg (2) auf seiner inneren oder seiner äußeren Mantelfläche oder auf seiner inneren und äußeren Mantelfläche (12) eine Struktur (13) aus einer Matrix (18) aus elastomerem Material (18) mit eingebetteten, die Gleitfähigkeit verbessernden Stoffen (19) aufweist, **dadurch gekennzeichnet dass** die in die elastomere Matrix (18) eingebetteten Stoffe Polyimid - Mahlfasern (19) sind die eine Länge von 0,2 bis 3mm aufweisen, bei denen Teillängen der eingebetteten Fasern (19) aus der Oberfläche der Struktur (13) herausgearbeitet sind und aufgerichtet aus der Oberfläche der Struktur (13) hervorstehen.

2. Luftfeder nach Anspruch 1, **dadurch gekennzeichnet, dass** die Fasern (19) eine Länge von 0,5 bis 2,3mm aufweisen.

## Claims

1. Pneumatic spring (1) with a pneumatic spring piston (5), with a pneumatic spring cover (3) and with a pneumatic spring concertina (2) composed of elastomeric material and having strengtheners embedded into the elastomeric material (15), the pneumatic spring concertina (2) having, on its inner or its outer surface area or on its inner and outer surface area (12), a structure (13) composed of a matrix (18) of elastomeric material (18) with embedded substances (19) which improve slidability, **characterized in that** the substances embedded into the elastomeric matrix (18) are polyamide ground fibres (19) which have a length of 0.2 to 3 mm and in which sublengths of the embedded fibres (19) are worked out of the surface of the structure (13) and protrude, erected, out of the surface of the structure (13).

2. Pneumatic spring according to Claim 1, **characterized in that** the fibres (19) have a length of 0.5 to 2.3 mm.

## Revendications

1. Ressort pneumatique (1) comprenant un piston de ressort pneumatique (5), un chapeau de ressort pneumatique (3) et un soufflet de ressort pneumatique (2) en matériau élastomère, avec des renforts noyés dans le matériau élastomère (15), le soufflet de ressort pneumatique (2) présentant sur sa surface d'enveloppe intérieure ou extérieure ou sur sa surface d'enveloppe intérieure et extérieure (12) une structure (13) constituée d'une matrice (18) de matériau élastomère (18) avec des substances noyées (19) améliorant le glissement, **caractérisé en ce que** les substances noyées dans la matrice élastomère (18) sont des fibres de polyimide broyées (19) qui présentent une longueur de 0,2 à 3 mm, dans lesquelles des longueurs partielles des fibres noyées (19) sont ressorties de la surface de la structure (13) et font saillie de manière dressée hors de la surface de la structure (13).

2. Ressort pneumatique selon la revendication 1, **caractérisé en ce que** les fibres (19) présentent une longueur de 0,5 à 2,3 mm.
